(19) Europäisches Patentamt
European Patent Office
Office européen des brevets

(11) **EP 2 153 575 B1**

(12) **FASCICULE DE BREVET EUROPEEN**

(45) Date de publication et mention
de la délivrance du brevet:
**23.05.2012 Bulletin 2012/21**

(21) Numéro de dépôt: **08805874.8**

(22) Date de dépôt: **28.05.2008**

(51) Int Cl.:
*H04L 9/08* (2006.01)    *H04L 9/22* (2006.01)

(86) Numéro de dépôt international:
**PCT/FR2008/050930**

(87) Numéro de publication internationale:
**WO 2008/152302 (18.12.2008 Gazette 2008/51)**

(54) **OBTENTION DE VALEURS DÉRIVÉES DÉPENDANT D'UNE VALEUR MAÎTRESSE SECRÈTE**

ERHALT VON ABGELEITETEN WERTEN IN ABHÄNGIGKEIT EINES GEHEIMEN LEITWERTES

OBTAINING DERIVED VALUES DEPENDING ON A SECRET MASTER VALUE

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **01.06.2007 FR 0755421**

(43) Date de publication de la demande:
**17.02.2010 Bulletin 2010/07**

(73) Titulaire: **FRANCE TELECOM
75015 Paris (FR)**

(72) Inventeurs:
• **PHAN, Duong Hieu
F-92400 Courbevoie (FR)**
• **BILLET, Olivier
F-06140 Tourrettes sur Loup (FR)**

(56) Documents cités:
**EP-A- 1 119 130      FR-A- 2 829 643
US-A1- 2006 034 457**

**Description**

L'invention se rapporte au domaine de la protection des contenus numériques ainsi que des logiciels contre l'usage non autorisé de ces contenus et logiciels. Plus précisément, l'invention concerne un procédé de protection de secrets numériques résistant aux attaques dites "attaques en boîte-blanche".

Dans le contexte du déploiement des réseaux de communications et des services audiovisuels, la distribution de contenus numériques devient problématique sur le plan des droits de propriété. En effet, la recopie de données numériques en très grand nombre, ainsi que leur redistribution à grande échelle, est devenue à la fois facile et peu coûteuse pour les particuliers. Par exemple, les industries dont les bénéfices reposent sur la distribution de données numériques (comme la musique, la vidéo, les logiciels de jeux, de navigation sur Internet, ou de manipulation de flux audiovisuels) souhaitent protéger ces données numériques contre une utilisation sortant du cadre défini par un contrat commercial entre fournisseur et consommateur ; c'est l'objet de la gestion des droits numériques (en anglais, *"Digital Rights Management"* ou DRM). Pour une présentation générale des problèmes liés à la protection des logiciels, on pourra consulter l'article de P.C. van Oorschot intitulé "Revisiting Software Protection" (Actes de la 6ème Conférence internationale "Information Security", Springer-Verlag, pages 1 à 13, 2003).

La demande de brevet EP1119130 divulgue la protection de données numériques contre des pirates n'ayant pas d'accès autorisé à la plateforme hébergeant ces données.

Le problème de sécurité auquel se rapporte la présente invention est celui de la protection d'un contenu numérique ou d'un logiciel, non seulement contre des pirates extérieurs à la plateforme, mais également et surtout contre l'utilisateur légitime de la plateforme informatique hébergeant ces données numériques. En effet, cet utilisateur peut être tenté de faire usage de ces données numériques en-dehors du cadre contractuel dans lequel elles lui ont été confiées. Dans ce contexte, les procédés cryptographiques habituels (chiffrement/déchiffrement, signatures, clés de session) sont inopérants puisque les clés secrètes requises pour pouvoir utiliser les données numériques sous contrat ont été évidemment fournies à l'utilisateur. L'utilisateur indélicat peut donc, par exemple, chercher à localiser ces clés secrètes en mémoire, ou chercher à identifier les étapes principales mises en oeuvre dans le logiciel, pour en faire un usage non autorisé.

Ce contexte de piratage est appelé "contexte d'attaque en boîte-blanche", suite à l'article de S. Chow, P. Eisen, H. Johnson et P.C. van Oorschot intitulé "White-Box Cryptography and an AES Implementation" (Actes du "International Workshop on Selected Areas in Cryptography", Springer, pages 250 à 270, 2003), et à l'article des mêmes auteurs intitulé *"*A White-Box DES Implementation for DRM Applications" (Actes du "Second ACM Workshop on Digital Rights Management', Springer, pages 1 à 15, 2003). Cette dénomination souligne la différence de ce contexte avec celui, bien connu, de la "boîte-noire", dans lequel un pirate cherchant à attaquer un logiciel ne peut observer que des couples (données d'entrée)/(données de sortie) associés à ce logiciel, sans avoir accès aux étapes de traitement intermédiaires mises en oeuvre par le logiciel ; alors que dans le contexte d'attaque en boîte-blanche, l'attaquant peut observer pas à pas l'exécution dynamique d'un logiciel, et même modifier des instructions de ce logiciel pour pouvoir étudier les conséquences de ces modifications sur le traitement effectué par le logiciel.

Notamment, un attaquant en boîte-blanche peut chercher à retrouver les valeurs de clés secrètes enregistrées dans un logiciel (on dira que ce logiciel est une "instanciation" particulière de l'algorithme général qu'il met en oeuvre), afin d'utiliser ces clés secrètes dans un logiciel équivalent dont dispose l'attaquant (en effet, l'algorithme mis en oeuvre par le logiciel est dans certains cas connu dans ses étapes principales), ou sur une autre plateforme. La protection de ces clés secrètes est donc essentielle, mais rendue d'autant plus difficile que les clés cryptographiques obéissent généralement à un format bien particulier qui les distingue des autres données enregistrées sur la plateforme informatique, ce qui permet à un attaquant de les y repérer assez facilement.

La orésente invention concerne donc un procédé selon la revendication 1.

Ainsi, selon l'invention, la valeur maîtresse $S$ n'est pas explicitement présente dans les données qui ont été fournies à la première entité. Grâce à ces dispositions, la première entité peut obtenir les valeurs dérivées $K_r$ auxquelles elle a droit, mais ne peut trouver la valeur maîtresse $S$ dont dépendent *in fine* les valeurs dérivées $K_r$ (via la table $T$), de sorte que la première entité ne peut faire usage des valeurs dérivées $K_r$ que dans le cadre prévu par la seconde entité.

La protection de la valeur *maîtresse S* en boîte-blanche ne doit pas faire oublier pour autant les possibilités d'attaque en boîte-noire. C'est pourquoi, selon des caractéristiques particulières, on choisit une fonction *pseudo-aléatoire* pour la fonction de combinaison $F_r$. Imaginons en effet que la fonction de combinaison $F_r$ soit réversible au lieu d'être pseudo-aléatoire ; dans ce cas, un attaquant en boîte noire pourrait, en faisant varier le paramètre d'entrée $r$, remonter, à partir des valeurs dérivées $K_r$, à tous les blocs $T_i$ et les enregistrer ; or la connaissance globale de la table $T$ est, en pratique, équivalente à la connaissance de la valeur maîtresse $S$. On notera qu'en revanche, l'obtention de certaines valeurs dérivées $K_r$ par un attaquant mettant en oeuvre en boîte-noire le procédé selon l'invention n'est pas équivalente à la connaissance de la valeur maîtresse $S$, pourvu que la fonction de combinaison $F_r$ soit choisie (comme le permettent les modes de réalisation décrits ci-dessous) de telle sorte que le nombre de valeurs dérivées $K_r$ soit suffisamment grand pour rendre matériellement impossible le stockage de l'ensemble des valeurs dérivées $K_r$.

En revanche, si le procédé selon l'invention est intégré dans une application particulière (telle que le déchiffrement ou l'authentification, cf. exemples ci-dessous) de telle sorte qu'un attaquant en boîte-noire ne puisse obtenir les valeurs dérivées $K_r$ proprement dites, l'exigence de sécurité mentionnée ci-dessus disparaît, et l'on peut envisager de prendre pour la fonction de combinaison une fonction (théoriquement) réversible, par exemple :

$$K_r = T_{i_1} \oplus T_{i_2} \oplus ... \oplus T_{i_u},$$

où le symbole $\oplus$ représente l'opération "ou-exclusif" bit à bit.

Corrélativement, l'invention concerne un dispositif selon la revendication 14.

Ce dispositif d'obtention d'une valeur dérivée pourra notamment prendre la forme d'une plate-forme logicielle, ou d'un circuit électronique.

Les avantages offerts par ce dispositif sont essentiellement les mêmes que ceux offerts par le procédé corrélatif succinctement exposé ci-dessus.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés d'obtention d'une valeur dérivée succinctement exposés ci-dessus, lorsqu'il est exécuté sur ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1 est un schéma synoptique illustrant le fonctionnement général du procédé selon l'invention du point de vue de la première entité, selon un mode de réalisation, et

- la figure 2 est un schéma synoptique illustrant un mode de réalisation pour la construction de la table $T$ par la seconde entité.

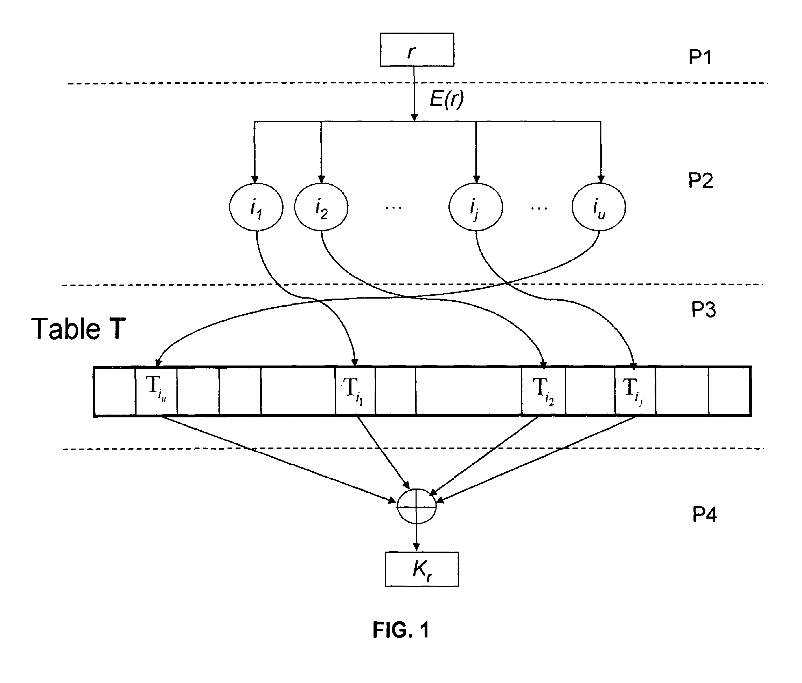

La figure 1 illustre le fonctionnement général du procédé selon l'invention du point de vue de la première entité, selon un mode de réalisation. Cette première entité peut, par exemple, être un consommateur de données numériques qui lui sont fournies par une deuxième entité constituée par un fournisseur de données numériques.

Pour pouvoir accéder à ces données numériques, le consommateur doit engendrer une ou plusieurs clés $K_r$, qui sont appelées "valeurs dérivées" dans le cadre de l'invention.

Les étapes du présent mode de réalisation sont les suivantes.

A l'étape P1, la plateforme informatique de la première entité reçoit un paramètre $r$.

A l'étape P2, la plateforme utilise un générateur pseudo-aléatoire prédéterminé pour déterminer, en fonction du paramètre $r$, une liste d'indices $(i_1, i_2,...i_u)$, où $u$ est un entier prédéterminé au moins égal à 1. Cette liste d'indices peut donc être vue comme la sortie d'une fonction $E(r)$. En pratique, on pourra avantageusement utiliser pour ce faire un générateur pseudo-aléatoire prédéterminé ; dans ce cas, on pourra en outre prévoir que ce générateur pseudo-aléatoire utilise le paramètre d'entrée $r$ soit comme graine, soit comme vecteur d'initialisation (on rappelle qu'un "vecteur d'initialisation" est un paramètre permettant d'utiliser plusieurs fois la même graine en engendrant plusieurs suites de nombres pseudo-aléatoires distinctes) ; lesdits indices pourront alors correspondre à $u$ séquences binaires successives de même longueur égale à $l$ bits, où $l$ est un entier prédéterminé au moins égal à 1, en sortie du générateur pseudo-aléatoire.

A l'étape P3, on consulte une table prédéterminée $T$ de blocs $T_i$. Dans l'exemple considéré, les valeurs de l'indice $i$ (vu comme un nombre entier) vont de 0 à $(2^l-1)$, et la table $T$ comprend donc $2^l$ blocs. On peut commodément donner à tous les blocs de la table $T$ une même longueur égale à $n$ bits, où $n$ est un entier prédéterminé au moins égal à 1. Suite à cette consultation, effectuée en se référant à la liste d'indices $(i_1, i_2,...,i_u)$, on obtient un ensemble de $u$ blocs $(T_{i_1}, T_{i_2},...,T_{i_u})$ sélectionnés dans la table $T$.

A l'étape P4, on applique une fonction de combinaison prédéterminée $F_r$, dépendant du paramètre $r$, auxdits blocs $(T_{i_1}, T_{i_2},...,T_{i_u})$. La valeur prise par cette fonction n'est autre que la valeur dérivée $K_r$ cherchée.

De nombreuses variantes de réalisation sont possibles pour la fonction $F_r$, dont quelques-unes sont données ci-après à titre d'exemple.

Selon une première variante, la fonction $F_r$ est telle que :

$$K_r = H(T_{i_1} \| T_{i_2} \| \ldots \| T_{i_u}),$$

où le symbole "‖" représente la concaténation et $H$ est une fonction de hachage prédéterminée.

Selon une deuxième et une troisième variantes, on prend $u = 1$, et le paramètre d'entrée r est tel que :

$$r = i \| j,$$

où le symbole "‖" représente la concaténation *et j* est un mot binaire de longueur *m,* où *m* est un entier prédéterminé au moins égal à 1. Autrement dit, dans les deuxième et troisième variantes, la fonction de sélection d'indices $E(r)$ ne produit qu'un seul indice *i* représenté par les *1* premiers bits en commençant par la gauche du paramètre d'entrée *r,* et la fonction $F_r$ ne dépend que d'un seul bloc $T_i$, ainsi sélectionné dans la table *T*. De plus, chacun des blocs $T_i$ peut commodément être représenté par un mot binaire de *longueur n* fixe, comme ci-dessus.

Cela étant posé, dans la deuxième variante, la mise en oeuvre de ladite fonction de combinaison $F_r$ comprend *m* étapes successives, l'étape n° *q* , où $1 \le q \le m$, comprenant la sélection comme résultat de l'étape, en fonction de la valeur du $q^{\text{ième}}$ bit dudit mot *j*, soit *des n* premiers bits, soit des *n* derniers bits d'un train binaire de longueur (2*n*) produit par un générateur pseudo-aléatoire *f* prédéterminé prenant pour graine :

- le résultat de l'étape précédente lors des étapes n°2 à n ° *m* , et

- ledit bloc $T_i$ lors de la première étape.

Dans la troisième variante, la mise en oeuvre de ladite fonction de combinaison $F_r$ comprend *m* étapes successives, l'étape n° *q*, où $1 \le q \le m$, comprenant la sélection comme résultat de l'étape, en fonction de la valeur du $q^{\text{ième}}$ bit dudit mot *j*, soit du résultat d'une première permutation pseudo-aléatoire *f'* prédéterminée de *n* bits, soit du résultat d'une seconde permutation pseudo-aléatoire *f''* prédéterminée de *n* bits, lesdites permutations étant appliquées :

- au résultat de l'étape précédente lors des étapes n ° 2 à n ° *m* , et

- audit bloc $T_i$ lors de la première étape.

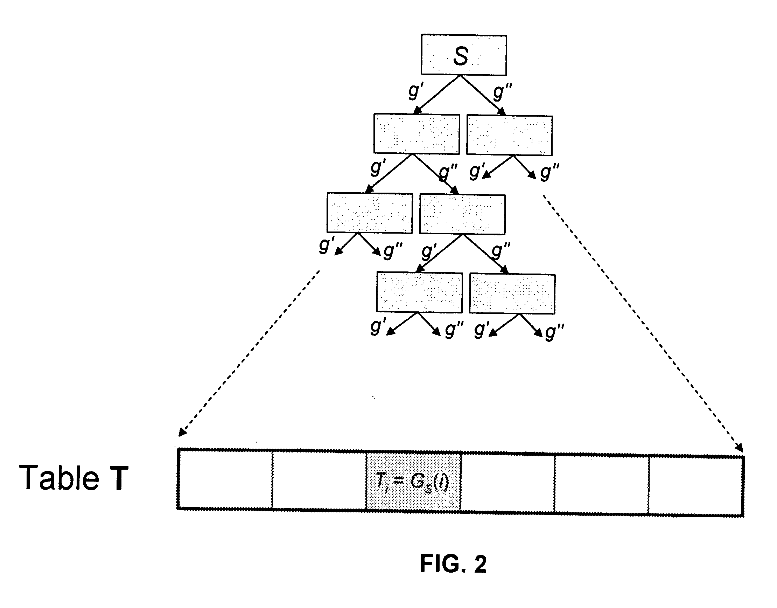

On va décrire à présent, en référence à la figure 2, un mode de réalisation pour la construction de la table *T* par la seconde entité.

Chacun des *u* indices de la liste pourra commodément être constitué par un mot binaire de longueur *l* comme ci-dessus. Quant à la valeur maîtresse *S,* elle pourra commodément être constituée par un mot binaire de longueur *n*.

La mise en oeuvre de ladite fonction de construction $G_S(i)$ comprend alors *l* étapes successives, l'étape n° *p*, où $1 \le p \le l$, comprenant la sélection comme résultat de l'étape, en fonction de la valeur du $p^{\text{ième}}$ bit de l'indice *i*, soit du résultat d'une première permutation pseudo-aléatoire (*g'*) de *n* bits, soit du résultat d'une seconde permutation pseudo-aléatoire (*g''*) de *n* bits, lesdites permutations étant appliquées :

- au résultat de l'étape précédente lors des étapes n ° 2 à n° *l*, et
- à ladite valeur maîtresse *S* lors de la première étape.

En variante (non représentée), la mise en oeuvre de ladite fonction de construction $G_S(i)$ comprend *l* étapes successives, l'étape n° *p*, où $1 \le p \le l$, comprenant la sélection comme résultat de l'étape, en fonction de la valeur du $p^{\text{ième}}$ bit de l'indice *i*, soit des *n* premiers bits, soit des *n* derniers bits d'un train binaire de longueur (2*n*) produit par un générateur pseudo-aléatoire (*g*) prenant pour graine :

- le résultat de l'étape précédente lors des étapes n°2 à n°*l* , et

- ladite valeur maîtresse *S* lors de la première étape.

D'autres variantes pour la fonction de construction $G_S(i)$ sont naturellement possibles.

Comme indiqué ci-dessus, la présente invention concerne également un système informatique mettant en oeuvre le procédé d'obtention d'une valeur dérivée décrit ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour la mise en oeuvre du procédé d'obtention d'une valeur dérivée selon l'invention.

En effet, l'invention vise aussi un programme d'ordinateur téléchargeable depuis un réseau de communication comprenant des instructions pour l'exécution des étapes d'un procédé d'obtention d'une valeur dérivée selon l'invention lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (*"floppy disc"* en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé selon l'invention.

La présente invention trouve son application dans le cadre de nombreuses applications mettant en jeu des contenus numériques.

C'est pourquoi l'invention concerne également, en particulier, un procédé de déchiffrement. Ce procédé est remarquable en ce qu'il utilise comme clé de déchiffrement une valeur dérivée $K_r$ obtenue au moyen de l'un quelconque des procédés d'obtention d'une valeur dérivée selon l'invention, pour déchiffrer un cryptogramme $C_r(M)$ reçu conjointement audit paramètre d'entrée $r$, où $M$ est un message en clair et $C_r$ un algorithme de chiffrement prédéterminé utilisant une clé de chiffrement associée à la clé de déchiffrement $K_r$.

De même, l'invention concerne également un procédé d'authentification. Ce procédé d'authentification est remarquable en ce que ladite première entité utilise comme clé secrète d'authentification auprès d'une entité vérificatrice une valeur dérivée $K_r$ obtenue au moyen l'un quelconque des procédés d'obtention d'une valeur dérivée selon l'invention, après réception dudit paramètre d'entrée $r$ destiné à une telle authentification.

L'invention concerne donc également un programme d'ordinateur téléchargeable depuis un réseau de communication et/ou stocké sur un support lisible par ordinateur et/ou exécutable par un microprocesseur, ledit programme étant remarquable en ce qu'il comprend des instructions pour l'exécution des étapes d'un procédé de déchiffrement tel que décrit succinctement ci-dessus, ou d'un procédé d'authentification tel que décrit succinctement ci-dessus, lorsqu'il est exécuté sur un ordinateur.

L'invention vise aussi un support d'informations lisible par un ordinateur, et comportant des instructions d'un programme d'ordinateur tel que mentionné ci-dessus.

## Revendications

1. Procédé d'obtention d'une valeur dérivée $K_r$ à partir d'un paramètre d'entrée $r$, ledit procédé comprenant les étapes suivantes :

   - la détermination par une première entité, en fonction dudit paramètre d'entrée $r$, d'une liste d'indices $i_1, i_2, ..., i_u$, où $u \geq 1$, dans une liste prédéterminée d'indices, au moyen d'une fonction de sélection d'indices prédéterminée $E(r)$, et
   - l'obtention par la première entité de ladite valeur dérivée $K_r$ en appliquant, en fonction dudit paramètre d'entrée $r$, une fonction de combinaison prédéterminée $F_r$ à un ensemble de blocs $T_{i_1}, T_{i_2}, ..., T_{i_u}$ lus , en se référant à ladite liste d'indices $i_1, i_2, ..., i_u$, dans une table prédéterminée $T$ de blocs $T_i$, ledit procédé étant **caractérisé en ce qu'**il comprend la génération de chacun desdits blocs $T_i$ par une seconde entité au moyen d'une fonction de construction pseudo-aléatoire $G_S(i)$ paramétrée par une valeur maîtresse $S$ non divulguée à ladite première entité.

2. Procédé d'obtention d'une valeur dérivée selon la revendication 1, dans lequel, ledit indice $i$ étant un mot binaire de longueur $l$ et la valeur maîtresse $S$ un mot binaire de longueur $n$ , la mise en oeuvre de ladite fonction de construction $G_S(i)$ comprend $l$ étapes successives, l'étape n° $p$, où $1 \leq p \leq l$, comprenant la sélection comme résultat de l'étape, en fonction de la valeur du $p^{\text{ième}}$ bit de l'indice $i$, soit du résultat d'une première permutation pseudo-aléatoire ($g$') de $n$ bits, soit du résultat d'une seconde permutation pseudo-aléatoire ($g$") de $n$ bits, lesdites permutations étant appliquées :

- au résultat de l'étape précédente lors des étapes n°2 à n°$l$, et
- à ladite valeur maîtresse $S$ lors de la première étape.

**3.** Procédé d'obtention d'une valeur dérivée selon la revendication 1, dans lequel ledit indice $i$ étant un mot binaire de longueur $l$ et la valeur maîtresse $S$ un mot binaire de longueur $n$, la mise en oeuvre de ladite fonction de construction $G_S(i)$ comprend $l$ étapes successives, l'étape n° $p$, où $1 \leq p \leq l$, comprenant la sélection comme résultat de l'étape, en fonction de la valeur du $p^{\text{ième}}$ bit de l'indice $i$, soit des $n$ premiers bits, soit des $n$ derniers bits d'un train binaire de longueur $2n$ produit par un générateur pseudo-aléatoire ($g$) prenant pour graine :

- le résultat de l'étape précédente lors des étapes n°2 à n°$l$, et
- ladite valeur *maîtresse S* lors de la première étape.

**4.** Procédé d'obtention d'une valeur dérivée selon l'une quelconque des revendications 1 à 3, dans lequel ladite fonction de sélection d'indices $E(r)$ est réalisée au moyen d'un générateur pseudo-aléatoire dont la sortie dépend dudit paramètre d'entrée r, et en ce que chacun desdits indices $i_1, i_2, ..., i_u$ est un mot binaire, de longueur fixe prédéterminée, extrait de la sortie dudit générateur pseudo-aléatoire.

**5.** Procédé d'obtention d'une valeur dérivée selon la revendication 4, dans lequel ledit générateur pseudo-aléatoire utilisé pour la détermination d'indices prend le paramètre d'entrée $r$ pour graine.

**6.** Procédé d'obtention d'une valeur dérivée selon la revendication 4, dans lequel ledit générateur pseudo-aléatoire utilisé pour la détermination d'indices prend le paramètre d'entrée $r$ pour vecteur d'initialisation.

**7.** Procédé d'obtention d'une valeur dérivée selon l'une quelconque des revendications 1 à 6, dans lequel ladite fonction de combinaison prédéterminée $F_r$ est pseudo-aléatoire.

**8.** Procédé d'obtention d'une valeur dérivée selon l'une quelconque des revendications 1 à 7, dans lequel ladite fonction de combinaison prédéterminée $F_r$ est telle que :

$$K_r = H(T_{i_1} \| T_{i_2} \| ... \| T_{i_u}),$$

où le symbole "$\|$" représente la concaténation et $H$ est une fonction de hachage prédéterminée.

**9.** Procédé d'obtention d'une valeur dérivée selon l'une quelconque des revendications 1 à 6, dans lequel ladite fonction de combinaison prédéterminée $F_r$ est telle que :

$$K_r = T_{i_1} \oplus T_{i_2} \oplus ... \oplus T_{i_u},$$

où le symbole $\oplus$ représente l'opération "ou-exclusif" bit à bit.

**10.** Procédé d'obtention d'une valeur dérivée selon l'une quelconque des revendications 1 à 3, dans lequel ladite liste d'indices ne comprend qu'un seul indice $i$, en ce que ledit paramètre d'entrée $r$ est tel que :

$$r = i \| j,$$

où le symbole "∥" représente la concaténation et j est un mot binaire de longueur $m$, en ce que chacun desdits blocs $T_i$ est représenté par un mot binaire de longueur $n$, et en ce que l'application de ladite fonction de combinaison $F_r$ comprend $m$ étapes successives, l'étape n° $q$, où $1 \leq q \leq m$, comprenant la sélection comme résultat de l'étape, en fonction de la valeur du $q^{\text{ième}}$ bit dudit mot $j$, soit des $n$ premiers bits, soit des $n$ derniers bits d'un train binaire de longueur $2n$ produit par un générateur pseudo-aléatoire $f$ prédéterminé prenant pour graine :

- le résultat de l'étape précédente lors des étapes n°2 à n° $m$, et
- ledit bloc $T_i$ lors de la première étape.

**11.** Procédé d'obtention d'une valeur dérivée selon l'une quelconque des revendications 1 à 3, dans lequel ladite liste d'indices ne comprend qu'un seul indice $i$, en ce que ledit paramètre d'entrée $r$ est tel que :

$$r = i \parallel j \, ,$$

où le symbole "∥" représente la concaténation et $j$ est un mot binaire de longueur $m$, en ce que chacun desdits blocs $T_i$ est représenté par un mot binaire de longueur $n$, et en ce que l'application de ladite fonction de combinaison $F_r$ comprend $m$ étapes successives, l'étape n° $q$, où $1 \leq q \leq m$, comprenant la sélection comme résultat de l'étape, en fonction de la valeur du $q^{\text{ième}}$ bit dudit $m$ot j, soit du résultat d'une première permutation pseudo-aléatoire $f'$ prédéterminée de $n$ bits, soit du résultat d'une seconde permutation pseudo-aléatoire $f''$ prédéterminée de $n$ bits, lesdites permutations étant appliquées :

- au résultat de l'étape précédente lors des étapes n°2 à n° $m$, et
- audit bloc $T_i$ lors de la première étape.

**12.** Procédé de déchiffrement, qui utilise comme clé de déchiffrement une valeur dérivée $K_r$ et qui comprend l'obtention de ladite valeur dérivée $K_r$ au moyen d'un procédé selon l'une quelconque des revendications 1 à 11, pour déchiffrer un cryptogramme $C_r(M)$ reçu conjointement audit paramètre d'entrée $r$, où $M$ est un message en clair et $C_r$ un algorithme de chiffrement prédéterminé utilisant une clé de chiffrement associée à la clé de déchiffrement $K_r$.

**13.** Procédé d'authentification, dans lequel ladite première entité utilise comme clé secrète d'authentification auprès d'une entité vérificatrice une valeur dérivée $K_r$ et qui comprend l'obtention de ladite valeur dérivée $K_r$ au moyen d'un procédé selon l'une quelconque des revendications 1 à 11, après réception dudit paramètre d'entrée $r$ destiné à une telle authentification.

**14.** Dispositif d'obtention d'une valeur dérivée $K_r$ à partir d'un paramètre d'entrée $r$, ledit dispositif comprenant :

- des moyens pour déterminer par une première entité, en fonction dudit paramètre d'entrée $r$, une liste d'indices $i_1, i_2, ..., i_u$ où $u \geq 1$, dans une liste prédéterminée d'indices, au moyen d'une fonction de sélection d'indices prédéterminée $E(r)$, et
- des moyens pour obtenir par la première entité ladite valeur dérivée $K_r$ en appliquant, en fonction dudit paramètre d'entrée $r$, une fonction de combinaison prédéterminée $F_r$ à un ensemble de blocs $T_{i_1}, T_{i_2}, ..., T_{i_u}$ lus dans lequel dans une table prédéterminée $T$ de blocs $T_i$, ledit dispositif étant **caractérisé en ce qu'**il comprend des moyens pour engendrer chacun desdits blocs $T_i$ par une seconde entité au moyen d'une fonction de construction pseudo-aléatoire $G_S(i)$ paramétrée par une valeur maîtresse $S$ non divulguée à ladite première entité.

**15.** Programme d'ordinateur téléchargeable depuis un réseau de communication et/ou stocké sur un support lisible par ordinateur et/ou exécutable par un microprocesseur, et comprenant des instructions pour l'exécution des étapes du procédé d'obtention d'une valeur dérivée selon l'une quelconque des revendications 1 à 11, ou d'un procédé de déchiffrement selon la revendication 12, ou d'un procédé d'authentification selon la revendication 13, lorsqu'il est exécuté sur ordinateur.

**16.** Support d'informations lisible par ordinateur, et comportant des instructions d'un programme d'ordinateur selon la revendication 16.

**Claims**

1. Method of obtaining a derived value $K_r$ on the basis of an input parameter item $r$, said method comprising the following steps:

   - the determination by a first entity, as a function of said input parameter $r$, of a list of indices $i_1, i_2, ..., i_u$, where $u \geq 1$, in a predetermined list of indices, by means of a predetermined function for selecting indices $E(r)$, and
   - the obtaining by the first entity of said derived value $K_r$ by applying, as a function of said input parameter $r$, a predetermined combining function $F_r$ to a set of blocks $T_{i_1}, T_{i_2}, ..., T_{i_u}$ read, by referring to said list of indices $i_1, i_2, ... , i_u$, from a predetermined table $T$ of blocks $T_1$,

   said method being **characterized in that** it comprises the generation of each of said blocks $T_i$ by a second entity by means of a pseudo-random construction function $G_S(i)$ parameterized by a master value S not disclosed to said first entity.

2. Method of obtaining a derived value according to Claim 1, in which, said index $i$ being a binary word of length $l$ and the master value $S$ a binary word of length $n$, the implementation of said construction function $G_S(i)$ comprises $1$ successive steps, step no. $p$, where $1 \leq p \leq 1$, comprising the selection as a result of the step, as a function of the value of the $p^{th}$ bit of the index $i$, either of the result of a first pseudo-random permutation ($g'$) of $n$ bits, or of the result of a second pseudo-random permutation ($g''$) of $n$ bits, said permutations being applied:

   - to the result of previous step during steps no. 2 to no. $l$, and
   - to said master value $S$ during the first step.

3. Method of obtaining a derived value according to Claim 1, in which, said index $i$ being a binary word of length $l$ and the master value **S** a binary word of length $n$, the implementation of said construction function $G_S(i)$ comprises $1$ successive steps, step no. $p$, where $1 \leq p \leq 1$ comprising the selection as a result of the step, as a function of the value of the $p^{th}$ bit of the index $i$, either of the $n$ first bits or of the $n$ last bits of a binary train of length $2n$ produced by a pseudo-random generator ($g$) taking as seed:

   - the result of the previous step during steps no. 2 to no. $1$, and
   - said master value $S$ during the first step.

4. Method of obtaining a derived value according to any one of Claims 1 to 3, in which said function of selecting indices $E(r)$ is carried out by means of a pseudo-random generator whose output depends on said input parameter $r$, and in which each of said indices $i_1, i_2, ..., i_u$ is a binary word, of predetermined fixed length, extracted from the output of said pseudo-random generator.

5. Method of obtaining a derived value according to Claim 4, in which said pseudo-random generator used for the determination of indices takes the input parameter $r$ as seed.

6. Method of obtaining a derived value according to Claim 4, in which pseudo-random generator used for the determination indices takes the input parameter $r$ as initialization vector.

7. Method of obtaining a derived value according to any of one of Claims 1 to 6, in which said predetermined combining function $F_r$ is pseudo-random.

8. Method of obtaining a derived value according to any one of Claims 1 to 7, in which said predetermined combining function $F_r$ is such that:

$$K_r = H(T_{i_1} \| T_{i_2} \| ... \| T_{i_u}),$$

where the symbol "$\|$" represents concatenation and $H$ is a predetermined hash function.

9. Method of obtaining a derived value according to any one of Claims 1 to 6, in which the predetermined combining function $F_r$ is such that:

$$K_r \;=\; T_{i_1} \oplus T_{i_2} \oplus \dots \oplus T_{i_u} \,,$$

where the symbol $\oplus$ represents the bitwise "exclusive- or" operation.

10. Method of obtaining a derived value according to any one of Claims 1 to 3, in which said list of indices comprises only a single index $i$, said input parameter $r$ is such that:

$$r = i \,\|\, j,$$

where the symbol "$\|$" represents concatenation and $j$ is a binary word of length $m$, each of said blocks $T_j$ is represented by a binary word of length $n$, and the application of said combining function $F_r$ comprises $m$ successive steps, step no. $q$, where $1 \le q \le m$, comprising the selection as result of the step, as a function of the value of the $q^{th}$ bit of said word $j$, either of the $n$ first bits, or of the $n$ last bits of a binary train of length $2n$ produced by a predetermined pseudo-random generator $f$ taking as seed:

- the result of the previous step during the steps no. 2 to no. $m$, and
- said block $T_i$ during the first step.

11. Method of obtaining a derived value according to any one of Claims 1 to 3, in which said list of indices comprises only a single index $i$, said input parameter $r$ is such that:

$$r = i \,\|\, j,$$

where the symbol "$\|$" represents concatenation and $j$ is a binary word of length $m$, each of said blocks $T_j$ is represented by a binary word of length $n$, and the application of said combining function $F_r$ comprises $m$ successive steps, step no. $q$, where $1 \le q \le m$, comprising the selection as result of the step, as a function of value of the $q^{th}$ bit of said word $j$, either of the result of a first predetermined pseudo-random permutation $f'$ of $n$ bits, or of the result of a second predetermined pseudo-random permutation $f''$ of $n$ bits, said permutations being applied:

- to the result of the previous step during the steps no. 2 to no. $m$, and
- to said block $T_i$ during the first step.

12. Method of decryption, which uses as decryption key a derived value $K_r$ and which comprises the obtaining of said derived value $K_r$ by means of a method according to any one of Claims 1 to 11, to decrypt a cryptogram $C_r(M)$ received jointly with said input parameter $r$, where $M$ is a plaintext and $C_r$ a predetermined encryption algorithm using an encryption key associated with the decryption key $K_r$.

13. Method of authentication, in which said first entity uses as secret key for authentication with a verifying entity a derived value $K_r$ and which comprises the obtaining of said derived value $K_r$ by means of a method according to any one of Claims 1 to 11, after receipt of said input parameter $r$ intended for such an authentication.

14. Device for obtaining a derived value $K_r$ on the basis of an input parameter $r$, said device comprising:

- means for determining by a first entity, as a function of said input parameter $r$, a list of indices $i_1, i_2, \dots, i_u$, where $u \ge 1$, in a predetermined list of indices, by means of a predetermined function for selecting indices $E(r)$, and
- means for obtaining by the first entity said derived value $K_r$ by applying, as a function of said input parameter $r$, a predetermined combining function $F_r$ to a set of blocks $T_{i_1}, T_{i_2}, \dots, T_{i_u}$ read, by referring to said list of indices $i_1, i_2, \dots, i_n$, from a predetermined table $T$ of blocks $T_i$,

said device being **characterized in that** it comprises means for bringing about each of said blocks $T_i$ by a second entity by means of a pseudo-random construction function $G_S(i)$ parameterized by a master value $S$ not disclosed to said first entity.

15. Computer program downloadable from a communication network and/or stored on a medium readable by computer and/or executable by a microprocessor, and comprising instructions for the execution of the steps of the method of obtaining a derived value according to any one of Claims 1 to 11, or of a method of decryption according to Claim 12, or of a method of authentication according to Claim 13, when it is executed on computer.

16. Information medium readable by computer, and comprising instructions of a computer program according to Claim 15.

**Patentansprüche**

1. Verfahren zum Erhalt eines abgeleiteten Werts $K_r$ ausgehend von einem Eingangsparameter r, wobei das Verfahren die folgenden Schritte enthält:

   - die Bestimmung, durch eine erste Entität, abhängig von dem Eingangsparameter r, einer Liste von Indices $i_1$, $i_2$, ..., $i_u$, wobei gilt $u \geq 1$, in einer vorbestimmten Liste von Indices, mittels einer vorbestimmten Auswahlfunktion von Indices E(r), und
   - den Erhalt, durch die erste Entität, des abgeleiteten Werts $K_r$ durch Anwendung, abhängig von dem Eingangsparameter r, einer vorbestimmten Kombinationsfunktion $F_r$ an eine Einheit von Blöcken $T_{i_1}$, $T_{i_2}$, ..., $T_{i_u}$, abgelesen unter Bezug auf die Liste von Indices $i_1$, $i_2$, ..., $i_u$, in einer vorbestimmten Tabelle T von Blöcken $T_i$,

   wobei das Verfahren **dadurch gekennzeichnet ist, dass** es die Erzeugung jedes der Blöcke $T_i$ durch eine zweite Entität mittels einer pseudo-zufälligen Konstruktionsfunktion $G_S(i)$ parametriert durch einen Leitwert S enthält, der der ersten Entität nicht offenbart wird.

2. Verfahren zum Erhalt eines abgeleiteten Werts nach Anspruch 1, bei dem, wenn der Index i ein Binärwort der Länge 1 und der Leitwert S ein Binärwert der Länge n ist, die Durchführung der Konstruktionsfunktion $G_s(i)$ 1 aufeinanderfolgende Schritte enthält, wobei der Schritt Nr. p, wobei gilt $1 \leq p \leq 1$, die Auswahl als Ergebnis des Schritts, abhängig vom Wert des p-ten Bits des Index i, entweder des Ergebnisses einer ersten pseudo-zufälligen Permutation (g') von n Bits, oder des Ergebnisses einer zweiten pseudo-zufälligen Permutation (g") von n Bits enthält, wobei die Permutationen angewendet werden:

   - an das Ergebnis des vorhergehenden Schritts bei den Schritten Nr. 2 bis Nr. 1, und
   - an den Leitwert S im ersten Schritt.

3. Verfahren zum Erhalt eines abgeleiteten Werts nach Anspruch 1, bei dem, wenn der Index i ein Binärwort der Länge 1 und der Leitwert S ein Binärwort der Länge n ist, die Durchführung der Konstruktionsfunktion $G_S(i)$ 1 aufeinanderfolgende Schritte enthält, wobei der Schritt Nr. p, in dem gilt $1 \leq p \leq 1$, die Auswahl als Ergebnis des Schritts, abhängig von dem Wert des p-ten Bits des Index i, entweder der n ersten Bits, oder der n letzten Bits einer Binärfolge der Länge 2n, erzeugt von einem Pseudo-Zufalls-Generator (g) enthält, indem als Saatwert genommen wird:

   - das Ergebnis des vorhergehenden Schritts bei den Schritten Nr. 2 bis Nr. 1, und
   - der Leitwert S im ersten Schritt.

4. Verfahren zum Erhalt eines abgeleiteten Werts nach einem der Ansprüche 1 bis 3, bei dem die Auswahlfunktion von Indices E(r) mittels eines Pseudo-Zufalls-Generators durchgeführt wird, dessen Ausgang von dem Eingangsparameter r abhängt, und dass jeder der Indices $i_1$, $i_2$, ..., $i_u$ ein Binärwort vorbestimmter fester Länge ist, das vom Ausgang des Pseudo-Zufalls-Generators entnommen wird.

5. Verfahren zum Erhalt eines abgeleiteten Werts nach Anspruch 4, bei dem der für die Bestimmung von Indices verwendete Pseudo-Zufalls-Generator den Eingangsparameter r als Saatwert nimmt.

6. Verfahren zum Erhalt eines abgeleiteten Werts nach Anspruch 4, bei dem der für die Bestimmung von Indices verwendete Pseudo-Zufalls-Generator den Eingangsparameter r als Initialisierungsvektor nimmt.

7. Verfahren zum Erhalt eines abgeleiteten Werts nach einem der Ansprüche 1 bis 6, bei dem die vorbestimmte Kombinationsfunktion $F_r$ pseudozufällig ist.

8. Verfahren zum Erhalt eines abgeleiteten Werts nach einem der Ansprüche 1 bis 7, bei dem die vorbestimmte

Kombinationsfunktion $F_r$ so ist, dass gilt:

$$K_r = H(T_{i_1} || T_{i_2} || \dots || T_{i_u}),$$

wobei das Symbol "∥" die Verkettung darstellt und H eine vorbestimmte Hash-Funktion ist.

9. Verfahren zum Erhalt eines abgeleiteten Werts nach einem der Ansprüche 1 bis 6, bei dem die vorbestimmtes Kombinationsfunktion $F_r$ so ist, dass gilt:

$$K_r = T_{i_1} \oplus T_{i_2} \oplus \dots \oplus T_{i_u},$$

wobei das Symbol $\oplus$ die Operation "Oder-Exklusiv" Bit für Bit darstellt.

10. Verfahren zum Erhalt eines abgeleiteten Werts nach einem der Ansprüche 1 bis 3, bei dem die Liste von Indices nur einen einzigen Index i enthält, der Eingangsparameter r derart ist, dass gilt:

$$r = i || j,$$

wobei das Symbol "∥" die Verkettung darstellt und j ein Binärwort der Länge m ist, jeder der Blöcke $T_i$ durch ein Binärwort der Länge n dargestellt wird, und die Anwendung der Kombinationsfunktion $F_r$ m aufeinanderfolgende Schritte enthält, wobei der Schritt Nr. q, wobei gilt $1 \leq q \leq m$, die Auswahl als Ergebnis des Schritts, abhängig vom Wert des q-ten Bits des Worts j, entweder der n ersten Bits, oder der n letzten Bits einer Bitfolge der Länge 2n enthält, erzeugt von einem vorbestimmten Pseudo-Zufalls-Generators f, der als Saatwert nimmt:

    - das Ergebnis des vorhergehenden Schritts bei den Schritten Nr. 2 bis Nr. m, und
    - den Block $T_i$ im ersten Schritt.

11. Verfahren zum Erhalt eines abgeleiteten Werts nach einem der Ansprüche 1 bis 3, bei dem die Liste von Indices nur einen einzigen Index i enthält, der Eingangsparameter r derart ist, das gilt:

$$r = i || j,$$

wobei das Symbol "∥" die Verkettung darstellt und j ein Binärwort der Länge m ist, jeder der Blöcke $T_i$ durch ein Binärwort der Länge n dargestellt wird, und die Anwendung der Kombinationsfunktion $F_r$ m aufeinanderfolgende Schritte enthält, wobei der Schritt Nr. q, wobei gilt $1 \leq q \leq m$, die Auswahl als Ergebnis des Schritts, abhängig vom Wert des q-ten Bits des Worts j, entweder des Ergebnisses einer ersten vorbestimmten pseudo-zufälligen Permutation f' von n Bits, oder des Ergebnisses einer zweiten vorbestimmten pseudo-zufälligen Permutation f'' von n Bits enthält, wobei die Permutationen angewendet werden:

    - an das Ergebnis des vorhergehenden Schritts bei den Schritten Nr. 2 bis Nr. m, und
    - an den Block $T_i$ im ersten Schritt.

12. Entschlüsselungsverfahren, das als Entschlüsselungsschlüssel einen abgeleiteten Wert $K_r$ verwendet, und das den Erhalt des Werts $K_r$ mittels eines Verfahrens nach einem der Ansprüche 1 bis 11 enthält, um ein Kryptogramm $C_r$ (M) zu entschlüsseln, das zusammen mit dem Eingangsparameter r empfangen wird, wobei M eine unverschlüsselte Nachricht und $C_r$ ein vorbestimmter Verschlüsselungsalgorithmus ist, der einen dem Entschlüsselungsschlüssel $K_r$

zugeordneten Verschlüsselungsschlüssel verwendet.

13. Authentifizierungsverfahren, bei dem die erste Entität als geheimen Authentifizierungsschlüssel bei einer Überprüfungsentität einen abgeleiteten Wert $K_r$ verwendet, und das den Erhalt des abgeleiteten Werts $K_r$ mittels eines Verfahrens nach einem der Ansprüche 1 bis 11 nach Empfang des Eingangsparameters r enthält, der für eine solche Authentifizierung bestimmt ist.

14. Vorrichtung zum Erhalt eines abgeleiteten Werts $K_r$ ausgehend von einem Eingangsparameter r, wobei die Vorrichtung enthält:

- Einrichtungen zum Bestimmen, durch eine erste Entität, abhängig von dem Eingangsparameter r, einer Liste von Indices $i_1$, $i_2$, ..., $i_u$, wobei gilt $u \geq 1$, in einer vorbestimmten Liste von Indices, mittels einer vorbestimmten Auswahlfunktion von Indices E(r), und
- Einrichtungen zum Erhalt durch die erste Entität, des abgeleiteten Werts $K_r$, indem abhängig vom Eingangsparameter r eine vorbestimmte Kombinationsfunktion $F_r$ an eine Einheit von Blöcken $T_{i_1}$, $T_{i_2}$, ..., $T_{i_u}$ angewendet wird, abgelesen unter Bezug auf die Liste von Indices $i_1$, $i_2$, ..., $i_u$, in einer vorbestimmten Tabelle T von Blöcken $T_i$,

wobei die Vorrichtung **dadurch gekennzeichnet ist, dass** sie Einrichtungen enthält, um jeden der Blöcke $T_i$ durch eine zweite Entität mittels einer pseudo-zufälligen Konstruktionsfunktion $G_S(i)$ parametriert durch einen Leitwert S zu erzeugen, der der ersten Entität nicht offenbart wird.

15. Computerprogramm, das von einem Kommunikationsnetz heruntergeladen und/oder auf einem computerlesbaren Träger gespeichert und/oder von einem Mikroprozessor ausgeführt werden kann und Anweisungen zur Ausführung der Schritte des Verfahrens zum Erhalt eines abgeleiteten Werts nach einem der Ansprüche 1 bis 11 oder eines Entschlüsselungsverfahrens nach Anspruch 12 oder eines Authentifizierungsverfahrens nach Anspruch 13 enthält, wenn es auf einem Computer ausgeführt wird.

16. Computerlesbarer Informationsträger, der Anweisungen eines Computerprogramms nach Anspruch 15 aufweist.

FIG. 1

FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1119130 A

**Littérature non-brevet citée dans la description**

- Revisiting Software Protection. **P.C. VAN OOR-SCHOT.** Actes de la 6ème Conférence internationale ''Information Security''. Springer-Verlag, 2003, 1-13

- White-Box Cryptography and an AES Implementation. **S. CHOW ; P. EISEN ; H. JOHNSON ; P.C. VAN OORSCHOT.** Actes du ''International Workshop on Selected Areas in Cryptography''. Springer, 2003, 250-270
- A White-Box DES Implementation for DRM Applications. Actes du ''Second ACM Workshop on Digital Rights Management'. Springer, 2003, 1-15